(19) Europäisches Patentamt
European Patent Office
Office européen des brevets

(11) **EP 4 738 771 A1**

(12) **EUROPEAN PATENT APPLICATION**

(43) Date of publication:
06.05.2026 Bulletin 2026/19

(21) Application number: 25199660.9

(22) Date of filing: 02.09.2025

(51) International Patent Classification (IPC):
**H04L 25/02** *(2006.01)* **H04L 25/06** *(2006.01)*
**H04B 7/0413** *(2017.01)*

(52) Cooperative Patent Classification (CPC):
**H04L 25/0224; H04L 25/0204; H04L 25/023;**
**H04L 25/067;** H04B 7/0413

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 05.11.2024 KR 20240155692

(71) Applicant: **Samsung Electronics Co., Ltd.**
**Suwon-si, Gyeonggi-do 16677 (KR)**

(72) Inventors:
• **KIM, Joohan**
**Suwon-si 16677 (KR)**
• **JUNG, Youngseok**
**Suwon-si 16677 (KR)**
• **JUNG, Jaehoon**
**Suwon-si 16677 (KR)**

(74) Representative: **Marks & Clerk LLP**
**15 Fetter Lane**
**London EC4A 1BW (GB)**

(54) **MODEM CHIP FOR ADJUSTING LOG LIKELIHOOD RATIO BY INFERRING CHANNEL ESTIMATION ERROR AND OPERATING METHOD OF THE MODEM CHIP**

(57) A modem chip includes a radio frequency integrated circuit (RFIC) configured to receive a data signal and a reference signal through a precoding resource block group (PRG) including a plurality of first subcarriers to which the data signal is allocated and a plurality of second subcarriers to which the reference signal is allocated, and a processor configured to calculate a delay spread value of the data signal by using the reference signal, determine one of two threshold values, adjacent to the delay spread value, of a plurality of threshold values as a maximum threshold value corresponding to the delay spread value, and calculate an adjustment log likelihood ratio (LLR) of each of at least one first subcarrier among the plurality of first subcarriers, based on an adjustment coefficient corresponding to the maximum threshold value.

FIG. 8

```
START

RECEIVE DATA SIGNAL AND REFERENCE SIGNAL
THROUGH PRG INCLUDING FIRST SUBCARRIERS TO
WHICH DATA SIGNAL IS ALLOCATED AND SECOND          — S100
SUBCARRIERS TO WHICH REFERENCE SIGNAL IS ALLOCATED

CALCULATE DELAY SPREAD VALUE OF
DATA SIGNAL BY USING REFERENCE SIGNAL              — S200

DETERMINE MAXIMUM THRESHOLD VALUE                  — S300
CORRESPONDING TO DELAY SPREAD VALUE

CALCULATE AT LEAST ONE ADJUSTMENT LLR
CORRESPONDING TO AT LEAST ONE FIRST SUBCARRIER,    — S400
BASED ON ADJUSTMENT COEFFICIENT
CORRESPONDING TO MAXIMUM THRESHOLD VALUE

END
```

EP 4 738 771 A1

**Description**

BACKGROUND

The inventive concept relates to a modem chip and an operating method thereof, and more particularly, to a modem chip and an operating method thereof, which may infer a channel estimation error of a reception signal based on delay spread and/or a reference signal, and may adjust a log likelihood ratio based on an inference result, and thus, may enhance the accuracy of decoding.

Recently, as wired/wireless communication technology and smart device-related technology advance rapidly, a wireless communication system needs the high accuracy of decoding of a signal received by a receiver.

As the reliability of a log likelihood ratio (LLR) increases, a received signal may be accurately decoded. In this case, as a channel estimation error of an estimated channel is large, the channel estimation error may increase, and due to this, the reliability of an LLR may be reduced, causing a reduction in performance of a wireless communication system. Generally, a channel estimation error may increase as the amount of channel change between subcarriers is large (frequency selectivity), or the number of resource elements (REs) to which a reference signal is allocated is reduced. Therefore, a method of enhancing the performance of decoding by inferring a channel estimation error to adjust an LLR, based on the amount of channel change and/or the reference signal, is required.

SUMMARY

The inventive concept provides a modem chip and an operating method thereof, which may infer a channel estimation error to adjust a log likelihood ratio and may thus enhance the accuracy of decoding.

The object of the inventive concept is not limited to the aforesaid, but other objects not described herein will be clearly understood by those of ordinary skill in the art from descriptions below.

According to an embodiment of the present disclosure, a modem chip includes a radio frequency integrated circuit (RFIC) configured to receive a data signal and a reference signal through a precoding resource block group (PRG) including a plurality of first subcarriers to which the data signal is allocated and a plurality of second subcarriers to which the reference signal is allocated, and a processor configured to calculate a delay spread value of the data signal by using the reference signal, determine one of two threshold values, adjacent to the delay spread value, of a plurality of threshold values as a maximum threshold value corresponding to the delay spread value, and calculate an adjustment log likelihood ratio (LLR) of each of at least one first subcarrier among the plurality of first subcarriers, based on an adjustment coefficient corresponding to the maximum threshold value.

According to an aspect of the present disclosure, an operating method of a modem chip includes receiving a data signal and a reference signal through a precoding resource block group (PRG) including a plurality of first subcarriers to which the data signal is allocated and a plurality of second subcarriers to which the reference signal is allocated, calculating a delay spread value of the data signal by using the reference signal, determining one of two threshold values, adjacent to the delay spread value, of a plurality of threshold values as a maximum threshold value corresponding to the delay spread value, and calculating an adjustment log likelihood ratio (LLR) of each of at least one first subcarrier among the plurality of first subcarriers, based on an adjustment coefficient corresponding to the maximum threshold value.

According to an aspect of the present disclosure, a modem chip includes a radio frequency integrated circuit (RFIC) configured to receive a data signal and a reference signal through a precoding resource block group (PRG) including a plurality of first subcarriers to which the data signal is allocated and a plurality of second subcarriers to which the reference signal is allocated, and a processor configured to calculate a delay spread value of the data signal by using the reference signal, and determine an adjustment coefficient so that an adjusted log likelihood ratio (LLR) of each of at least one first subcarrier among the plurality of first subcarriers is inversely proportional to the delay spread value. The adjusted LLR corresponds to an LLR of each of the at least one first subcarrier adjusted using the adjustment coefficient.

At least some of the above and other features of the invention are set out in the claims.

BRIEF DESCRIPTION OF THE DRAWINGS

Embodiments will be more clearly understood from the following detailed description taken in conjunction with the accompanying drawings in which:

FIG. 1 is a block diagram illustrating a wireless communication system according to an embodiment;
FIG. 2 is a block diagram illustrating a wireless communication device according to an embodiment;
FIG. 3 is a block diagram illustrating a log likelihood ratio (LLR) adjustment module adjusting an LLR, according to an embodiment;
FIG. 4 is a graph for describing a frequency selectivity in an edge portion of a precoding resource block group (PRG), according to an embodiment;

FIG. 5 is a graph for describing a mean square error (MSE) in an edge portion of a PRG, according to an embodiment;

FIG. 6 is a diagram illustrating a basic structure of a time-frequency domain which is a wireless resource region, in a wireless communication system;

FIG. 7 is a diagram for describing channel estimation of a data signal based on a reference signal, according to an embodiment;

FIG. 8 is a flowchart illustrating an operating method of a modem chip, according to an embodiment; and

FIG. 9 is a block diagram illustrating a wireless communication device according to an embodiment.

## DETAILED DESCRIPTION OF THE EMBODIMENTS

Hereinafter, embodiments will be described in detail with reference to the accompanying drawings.

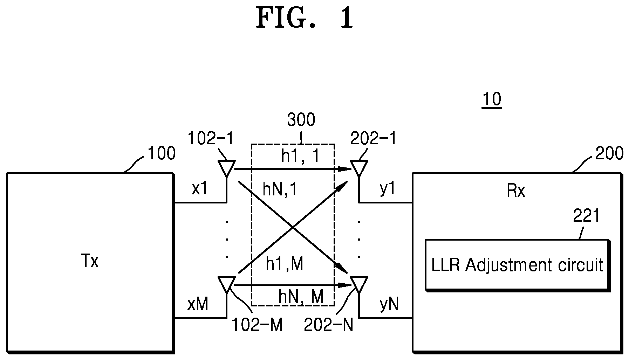

FIG. 1 is a block diagram illustrating a wireless communication system according to an embodiment.

Referring to FIG. 1, a communication system 10 according to an embodiment may include a transmitter 100 and a receiver 200, which perform wireless communication through a multiple input and multiple output (MIMO) channel 300.

The communication system 10 may be an arbitrary system including the MIMO channel 300. In some embodiments, the communication system 10 may be a non-limiting embodiment and may be a wireless communication system such as a 5th generation (5G) wireless system, a long term evolution (LTE) system, and WiFi. In some embodiments, the communication system 10 may be a wired communication system such as a storage system and a network system. Hereinafter, the communication system 10 is described as a wireless communication system, but embodiments are not limited thereto.

For example, the transmitter 100 may be a base station or an element included in the base station. The base station may be referred to as a fixed station which communicates with a terminal and/or another base station and may communicate with a terminal and/or another base station to transmit or receive data and/or control information. The base station may be referred to as a Node B, an evolved-Node B (eNB), a base transceiver system (BTS), or an access point (AP).

For example, the receiver 200 may be a terminal or an element included in the terminal. The terminal may be a wireless communication device and may denote various devices which may communicate with the transmitter 100 to transmit or receive data and/or control information. For example, the terminal may be referred to as user equipment, a mobile station (MS), a mobile terminal (MT), a user terminal (UT), a subscribe station (SS), a wireless device, or a portable device.

A wireless communication network between the transmitter 100 and the receiver 200 may share available network resources, and thus, may support communication with a plurality of users. For example, in the wireless communication network, information may be transmitted through various schemes such as code division multiple access (CDMA), frequency division multiple access (FDMA), time division multiple access (TDMA), orthogonal frequency division multiple access (OFDMA), and single carrier frequency division multiple access (SC-FDMA).

The transmitter 100 may include a plurality of transmission antennas 102-1 to 102-M (where M may be a positive integer) and may transmit a plurality of symbols x1 to xM through the plurality of transmission antennas 102-1 to 102-M, respectively. Also, the receiver 200 may include a plurality of reception antennas 202-1 to 202-N (where N may be a positive integer) and may receive a plurality of symbols y1 to yN through the plurality of reception antennas 202-1 to 202-N, respectively.

The receiver 200 according to an embodiment may include a log likelihood ratio (LLR) adjustment circuit 221. The LLR adjustment circuit 221 may infer a channel estimation error of a received signal based on the number of resource elements (REs) to which a reference signal is allocated and/or the delay spread of the received signal, and thus, may adjust an LLR corresponding to a subcarrier which is predicted to have a large channel estimation error. The channel estimation error may not be directly measured but can be inferred using mathematical models and signal properties. For example, in a new radio (NR) network, channel estimation using the reference signal may be performed by precoding resource block group (PRG) units, and when a channel estimation error is inferred to be large, the reliability of an LLR corresponding to a subcarrier disposed in an edge (or an edge region) of a PRG may be low. Accordingly, when the channel estimation error is large, the accuracy of decoding of the received signal may be low. The subcarrier disposed in an edge of the PRG may correspond to a subcarrier having a lowest frequency among a plurality of subcarriers of the PRG or a subcarrier having a highest frequency among the plurality of subcarriers of the PRG. The plurality of subcarriers in the PRG may be spaced apart from each other by subcarrier spacing (e.g., 15 kHz in LTE and NR, for example). In an embodiment, each of the REs may be the smallest possible unit in communication such as a symbol.

An LLR may be calculated with reference to the following Equations 1 and 2.

[Equation 1]

$$\boldsymbol{y}_i = \boldsymbol{H}_i \boldsymbol{x}_i + \boldsymbol{n}_i$$

In Equation 1, $\boldsymbol{y}_i$ may denote a reception signal of an $i$ subcarrier (or an $i$ RE), $\boldsymbol{x}_i$ may denote a transmission signal of the $i$ subcarrier (or the $i$ RE), $\boldsymbol{H}_i$ may denote a channel of the $i$ subcarrier (or the $i$ RE), and $\boldsymbol{n}_i$ may denote additive white Gaussian noise (AWGN) of the $i$ subcarrier (or the $i$ RE). An inference signal may be included in the AWGN. For example, noise of the reception antenna in the communication system 10 may be considered together with an influence of the inference signal. In this case, dispersion of AWGN in each of the plurality of reception antennas 202-1 to 202-N may differ and may be spatially correlated, and hereinafter, it may be assumed that pieces of power of pieces of AWGN are equal to one another and not spatially correlated for each reception antenna. In this case, AWGN may be the same as noise to which a whitening filter is applied. However, this is for convenience of description, and embodiments are not limited thereto.

[Equation 2]

$$L_i\big(b_{\mathrm{m},l}\big) = \log \frac{\max\limits_{x_i:bm,l=1} e^{\frac{\|y_i - H_i x_i\|^2}{\sigma^2}}}{\max\limits_{x_i:bm,l=0} e^{\frac{\|y_i - H_i x_i\|^2}{\sigma^2}}} = \frac{1}{\sigma^2}\left(\min_{b_l=1}\|\boldsymbol{y}_i - \boldsymbol{H}_i \boldsymbol{x}_i\|^2 - \min_{b_l=0}\|\boldsymbol{y}_i - \boldsymbol{H}_i \boldsymbol{x}_i\|^2\right)$$

In Equation 2, LLR calculation based on a max log map scheme is expressed as an equation. In an embodiment, an LLR may be calculated as expressed in Equation 2, but this is for convenience of description and embodiments are not limited thereto. In Equation 2, $\boldsymbol{y}_i$, $\boldsymbol{x}_i$, and $\boldsymbol{H}_i$ may be understood through Equation 1 described above. In Equation 2, $\boldsymbol{L}_i$ may denote an LLR of the $i^{th}$ subcarrier (or the $i$ RE), $\sigma^2$ may denote noise dispersion of AWGN (e.g. may be the variance of the AWGN), and $b_{\mathrm{m},l}$ may denote an $l^{th}$ bit ($l$ may be a positive integer) of a symbol transmitted in an mth transmission antenna (or an mth transmission layer) (where m may be a positive integer of 1 to M).

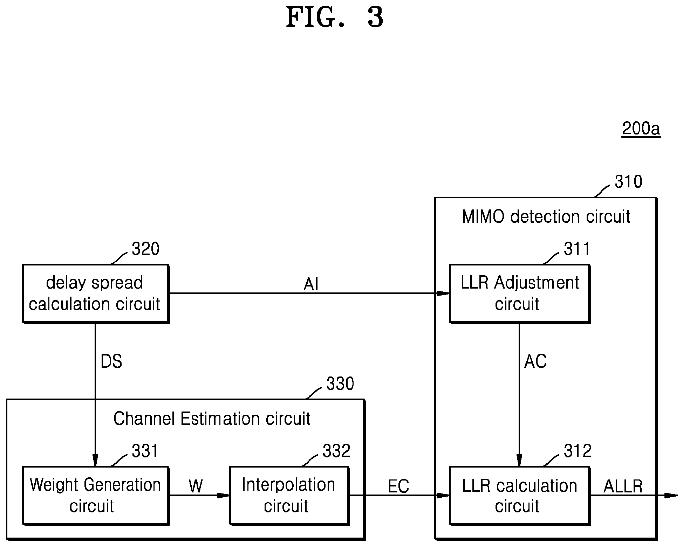

The receiver 200 may decode the reception signal based on the LLR. For example, when the LLR is a positive number, the receiver 200 may decode a corresponding symbol as '1', and when the LLR is a negative number, the receiver 200 may decode a corresponding symbol as '0'. The LLR may denote the probability that the reception signal is decoded as '0' or 1'. A method of adjusting an LLR by inferring a channel estimation error by using the receiver 200 is described below in detail with reference to FIG. 3.

The receiver 200 may receive a reference signal and a data signal each allocated to a plurality of REs. For example, the receiver 200 may receive a signal from the transmitter 100, and the received signal may include a reference signal and a data signal. The receiver 200 may receive a data signal allocated to a plurality of first REs and may receive a reference signal allocated to a plurality of second REs.

The receiver 200 according to an embodiment may calculate an LLR corresponding to each of the plurality of first REs so as to decode a data signal. In this case, as described above, there may be an LLR where reliability is low, due to a channel estimation error. Accordingly, the receiver 200 according to an embodiment may infer an LLR where a channel estimation error is large (i.e., reliability is low), based on a delay spread value and/or the number of second REs, and thus, may adjust an LLR where reliability is low. The receiver 200 may adjust an LLR where reliability is low, thereby enhancing the performance of decoding. The receiver 200 according to an embodiment may determine the reliability of an LLR based on the delay spread value and/or the number of second REs, and when the reliability of the LLR is low, the receiver 200 may adjust a corresponding LLR.

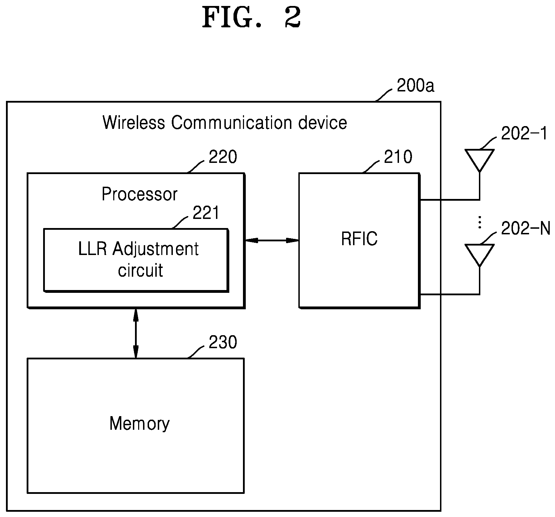

FIG. 2 is a block diagram illustrating a wireless communication device 200a according to an embodiment.

The wireless communication device 200a of FIG. 2 may correspond to the receiver (200 of FIG. 1) described above with reference to FIG. 1, and repeated descriptions thereof are omitted.

Referring to FIG. 2, the wireless communication device 200a according to an embodiment may include a radio frequency integrated circuit (RFIC) 210, a processor 220, a memory 230, and a plurality of antennas 202-1 to 202-N. The wireless communication device 200a may further include other elements in addition to the elements illustrated in FIG. 2. The RFIC 210 and the processor 220 may be included in one modem chip. Therefore, the wireless communication device 200a according to an embodiment may include a modem chip which performs an operation described below.

As described above, the wireless communication device 200a may transmit or receive a signal through at least one of the plurality of antennas 202-1 to 202-N to access a wireless communication system.

As described above, the RFIC 210 may transmit or receive a symbol vector through at least one of the plurality of antennas 202-1 to 202-N. For example, at least one of the plurality of antennas 202-1 to 202-N may serve as a transmission antenna. The transmission antenna may transmit a signal to an external device (for example, another wireless communication device or a base station (BS)) for the wireless communication device 200a. The other antennas of the plurality of antennas 202-1 to 202-N may serve as a reception antenna. The reception antenna may receive a wireless signal from the external device.

The processor 220 may control the overall operation of the wireless communication device 200a, and for example, the processor 220 may be a central processing unit (CPU). The processor 220 (e.g., a single core processor) may include one processor core. The processor 220 (e.g., a multi-core processor) may include a plurality of processor cores. The processor 220 may process or execute programs and/or data stored in the memory 230. In an embodiment, the processor 220 may execute the programs stored in the memory 230, and thus, may perform various arithmetic operations or may control various functions of the wireless communication device 200a.

The processor 220 according to an embodiment may infer a channel estimation error as described above with reference to FIG. 1 and may adjust an LLR value to enhance the accuracy of decoding, based on an inference result. The processor 220 according to an embodiment may infer a channel estimation error based on delay spread and/or the number of REs to which a reference signal is allocated. For example, as the number of REs to which a reference signal is allocated is reduced, a channel estimation error may be large. Also, as delay spread is large, a channel estimation error may be large.

The processor 220 according to an embodiment may include an LLR adjustment circuit 221. The LLR adjustment circuit 221 may include a processing circuit such as hardware including a logic circuit, software such as a processor executing software, or a combination thereof. For example, in more detail, the processing circuit may include an arithmetic logic unit (ALU), a digital signal processor, a microcomputer, a field programmable gate array (FPGA), a microprocessor, and an application-specific integrated circuit (ASIC), but embodiments are not limited thereto.

The LLR adjustment circuit 221 according to an embodiment may adjust an LLR value based on a delay spread value and/or the number of REs to which a reference signal is allocated. For example, the LLR adjustment circuit 221 may receive adjustment information including information about the delay spread value and/or the number of REs to which the reference signal is allocated. The LLR adjustment circuit 221 may adjust an LLR based on the adjustment information. For example, the LLR adjustment circuit 221 may receive adjustment information including information about where the delay spread value is large, or the number of REs to which the reference signal is allocated is relatively small, and based thereon, the LLR adjustment circuit 221 may infer that a channel estimation error is large, and thus, may adjust an LLR value to be less. Here, the adjusted LLR may correspond to a subcarrier disposed at each edge of a PRG. This will be described below in more detail with reference to FIG. 3.

The memory 230 according to an embodiment may store a plurality of threshold values predetermined and a plurality of adjustment coefficients respectively corresponding to the plurality of threshold values. The adjustment coefficients are described below in more detail with reference to Equation 5. The processor 220 according to an embodiment may request a corresponding adjustment coefficient, based on adjustment information about a delay spread value and/or the number of REs to which a reference signal is allocated, as described below with reference to FIG. 3, and may calculate an adjusted LLR based on the adjustment coefficient. For example, the processor 220 according to an embodiment may request a first adjustment coefficient corresponding to a first threshold value, based on a first delay spread value which is greater than the first threshold value. The processor 220 may request a second adjustment coefficient corresponding to a second threshold value, based on the second delay spread value which is less than the first threshold value and greater than the second threshold value. Here, the second adjustment coefficient may be greater than the first adjustment coefficient. Similar to the embodiment described above, the processor 220 according to an embodiment may request a corresponding adjustment coefficient, based on a threshold value stored in the memory 230 and the number of REs to which the reference signal is allocated.

The processor 220 according to an embodiment may calculate a delay spread value corresponding to a received signal, based on the reference signal. As described above, the received signal may include the reference signal and a data signal.

The processor 220 according to an embodiment may compare the delay spread value, corresponding to the received signal, with a plurality of threshold values stored in the memory 230 to determine a maximum threshold value corresponding to the delay spread value and may calculate an LLR corresponding to at least one subcarrier disposed at both edges of a PRG, based on an adjustment coefficient corresponding to the maximum threshold value corresponding to the delay spread value. Here, the maximum threshold value may denote the largest threshold value among at least one threshold value which is less than the delay spread value. However, embodiments are not limited thereto, and the maximum threshold value may denote the smallest threshold value among at least one threshold value which is greater than the delay spread value.

In an embodiment, an LLR adjusted based on an adjustment coefficient corresponding to the adjustment information may be referred to as an adjustment LLR, and an LLR which is not adjusted may be referred to as a conventional LLR (i.e., a raw LLR). In an embodiment, the raw LLR may be directly calculated from the received signal, without correction for a channel estimation error, for example. In this description, the adjustment LLR and the LLR may refer to a numerical value. For example, if the adjustment LLR or the LLR is greater than 0, a bit value of the received signal is more likely to be 1. If the adjustment LLR or the LLR is less than 0, a bit value of the received signal is more likely to be 0.

FIG. 3 is a block diagram illustrating a wireless communication device 200a according to an embodiment.

FIG. 3 illustrates in more detail elements which are associated with LLR adjustment and may be included in the processor 220 of FIG. 2. FIG. 3 may be understood with reference to FIG. 2, and repeated descriptions may be omitted.

Referring to FIG. 3, the wireless communication device 200a may include a MIMO detection circuit 310, a delay spread calculation circuit 320, and a channel estimation circuit 330.

The delay spread calculation circuit 320 according to an embodiment may calculate a delay spread value DS needed for weight calculation for channel estimation. The delay spread calculation circuit 320 may calculate a plurality of delay spread values DS corresponding to a data signal by using a reference signal. For example, the delay spread calculation circuit 320 may calculate a delay spread value DS corresponding to a received signal by using at least one of a tracking reference signal (TRS), a synchronization signal block demodulation reference signal (SSB DMRS), and a channel state information reference signal (CSI RS). The reference signal included in the received signal is not limited to the embodiment described above.

A delay spread value may be a result obtained by calculating the degree of delay spread and may be more clearly understood with reference to Equations 3 and 4. The delay spread calculation circuit 320 may output adjustment information AI about the delay spread value DS and/or the number of REs to which the reference signal is allocated. The delay spread calculation circuit 320 may output the delay spread value DS to the channel estimation circuit 330. The delay spread calculation circuit 320 may output the adjustment information AI to the MIMO detection circuit 310.

Delay spread may denote a phenomenon where signals received through different paths are distorted due to a path difference between the different paths, in a multi-path environment based on the MIMO channel (300 of FIG. 1) described above. For example, delay spread may denote a phenomenon where signals received through different paths have different delay times, and a waveform is distorted by a synthesis of the different paths in terms of time. For example, the term "delay spread" may refer to a dispersion in time delay that occurs when a signal is received through multiple transmission paths in a wireless communication system. The signal may arrive at the receiver via various paths due to reflections from surrounding objects. Since each of these paths may differ in length, the signal components may arrive at the receiver at different times. The difference in arrival times between the earliest and latest received signal components may be referred to as the delay spread. A delay spread value may be expressed as an equation as in the following Equations 3 and 4.

[Equation 3]

$$g(t) = \sum_{l=0}^{L-1} \alpha_l \delta(t - \tau_l T_s)$$

Equation 3 may represent a channel impulse function in a time domain. In Equation 3, $g(t)$ may denote the channel impulse response at time $t$, $L$ may denote the number of multipaths (e.g. the number of transmission paths) of the channel impulse function, and $\alpha_l$ may denote intensity of an $l^{th}$ impulse. $\tau_l$ may denote a time delay of the $l^{th}$ impulse, and $T_s$ may denote a sampling rate. $\delta()$ may denote the Dirac delta function.

[Equation 4]

$$\tau_{RMS} = \sqrt{\frac{\sum_{l=0}^{L-1} |\alpha_l|^2 (\tau_l - \tau_{AVG})^2}{\sum_{l=0}^{L-1} |\alpha_l|^2}}$$

Equation 4 may represent a root mean square (RMS) delay spread value. The RMS delay spread value may be weighted by power. In Equation 4, $\tau_{AVG}$ may denote a mean delay spread value. The mean delay spread value may be a weighted mean (weighted by power). In detail, $\tau_{AVG}$ may be expressed as $\left. \sum_{l=0}^{L-1} |\alpha_l|^2 \tau_l \middle/ \sum_{l=0}^{L-1} |\alpha_l|^2 \right.$.

In an embodiment, for convenience of description, the delay spread value DS may be described as the RMS delay spread value. The RMS delay spread value may be described with reference to Equation 3 and Equation 4, but the delay spread value DS according to an embodiment is not limited to the RMS delay spread value. For example, the delay spread value DS may be excess delay spread, maximum excess delay, and maximum delay spread. Here, the maximum delay spread may denote $\alpha_l$ when $l$ is $L - 1$, in Equation 3.

It has been described that the delay spread calculation circuit 320 of FIG. 3 calculates the delay spread value DS and outputs the adjustment information AI including the information about the delay spread value DS and/or the number of REs to which the reference signal is allocated, but the delay spread calculation circuit 320 is not limited thereto. The delay spread calculation circuit 320 according to an embodiment may further calculate information about a channel environment such as a signal to noise ratio (SNR) and Doppler frequency so as to calculate a weight W for channel estimation described below. The delay spread calculation circuit 320 may output the SNR, the Doppler frequency, and the delay spread value DS to the channel estimation circuit 330. In an embodiment, for convenience of description, it may be mainly described that the delay spread calculation circuit 320 outputs the delay spread value DS to the channel estimation circuit 330.

The channel estimation circuit 330 according to an embodiment may receive the delay spread value DS from the delay spread calculation circuit 320. The channel estimation circuit 330 may estimate a channel of a received signal by using the reference signal.

The channel estimation circuit 330 according to an embodiment may include a weight calculation circuit 331 and an interpolation circuit 332.

The weight calculation circuit 331 may calculate a weight W to be used in channel estimation, based on the reference signal and the delay spread value DS. For example, the reference signal may be a demodulation reference signal (DMRS), and the weight calculation circuit 331 may calculate the weight W based on a minimum mean square error (MMSE) scheme. The weight calculation circuit 331 may calculate the weight W, based on a channel environment and a position of an RE corresponding to a channel which is to be estimated. For example, the weight calculation circuit 331 may calculate the weight W having a relatively greater value for an RE adjacent to an RE to which a DMRS is allocated compared to an RE distant from the RE to which the DMRS is allocated. Also, as described above, the weight calculation circuit 331 may calculate the weight W, based on information associated with a channel state such as the SNR, the delay spread value DS, and the Doppler frequency. In an embodiment, for convenience of description, it may be mainly described that the weight calculation circuit 331 calculates the weight W based on the delay spread value DS. The weight calculation circuit 331 according to an embodiment may output the calculated weight W to the interpolation circuit 332.

The interpolation circuit 332 according to an embodiment may estimate the channel of the received signal by using the weight W to calculate a channel estimation value EC. The channel estimation circuit 330 may output the channel estimation value EC to the MIMO detection circuit 310.

The MIMO detection circuit 310 according to an embodiment may receive the channel estimation value EC and the adjustment information AI including the information about the delay spread value DS and/or the number of REs to which the reference signal is allocated. The MIMO detection circuit 310 may calculate an LLR, based on the adjustment information AI and the channel estimation value EC. For example, the MIMO detection circuit 310 may receive the channel estimation value EC and the delay spread value DS included in the adjustment information AI and may calculate an LLR corresponding to each of a plurality of REs to which a data signal is allocated, so as to decode the data signal received.

The MIMO detection circuit 310 according to an embodiment may include an LLR adjustment circuit 311 and an LLR calculation circuit 312.

The LLR adjustment circuit 311 according to an embodiment may receive the adjustment information AI. As described above, a receiver may receive a data signal allocated to a plurality of first REs and a reference signal allocated to a plurality of second REs. The LLR adjustment circuit 311 may infer a channel estimation error, based on adjustment information AI including information about the delay spread value DS and/or the number of second REs. In a case where it is inferred that the channel estimation error is large, it may be predicted that the reliability of an LLR corresponding to a subcarrier disposed at an edge of a PRG is low. Accordingly, the LLR adjustment circuit 311 according to an embodiment may output an adjustment coefficient AC to the LLR calculation circuit 212 so as to calculate an LLR corresponding to each subcarrier disposed at an edge of a PRG which is predicted to have low reliability. The adjustment coefficient AC may be described with reference to the following Equation 5, but the adjustment coefficient AC according to an embodiment is not limited thereto.

[Equation 5]

$$L_i(b_{0,l}) = \log \frac{\max\limits_{x_i:b_{0,l}=1} e^{-\frac{\|y_i-\widehat{H_i}x_i\|^2}{\sigma^2+\rho_i^2}}}{\max\limits_{x_i:b_{0,l}=0} e^{-\frac{\|y_i-\widehat{H_i}x_i\|^2}{\sigma^2+\rho_i^2}}} = \frac{1}{(\sigma^2+\rho_i^2)}\left(\min\limits_{b_l=1}\|y_i-\widehat{H_i}x_i\|^2 - \min\limits_{b_l=0}\|y_i-\widehat{H_i}x_i\|^2\right)$$

$$\cong \varepsilon_i \cdot \frac{1}{(\sigma^2)}\left(\min\limits_{b_l=1}\|y_i-\widehat{H_i}x_i\|^2 - \min\limits_{b_l=0}\|y_i-\widehat{H_i}x_i\|^2\right), \varepsilon_i \leq 1$$

In Equation 5, $L_i$ may denote the LLR for an $i^{th}$ subcarrier, an estimated channel estimation value may be $\widehat{H_i}$, and

$\rho_i^2$ may denote a variance of a channel estimation error of the $i^{th}$ subcarrier. $\varepsilon_i$ may be an adjustment coefficient. Here, a

$\rho_i^2$ value may differ from a $\varepsilon_i$ value, based on a channel characteristic, a position of a reference signal, and a channel estimation scheme. That is, $\varepsilon_i$ may be a coefficient that may be adjusted based on a channel characteristic, a position of a reference signal, and a channel estimation scheme. When the adjustment coefficient $\varepsilon_i$ is applied to adjust the LLR, the LLR may be an adjustment LLR (ALLR). $x_i$ and $y_i$ can be understood with reference to the description of Equation 1 above, and $\sigma^2$ and $b_{0,i}$ can be understood with reference to the description of Equation 2 above.

The LLR adjustment circuit 311 according to an embodiment may output, to the LLR calculation circuit 312, a first adjustment coefficient corresponding to a predetermined first threshold value when the delay spread value DS corresponding to the received signal is greater than or equal to the first threshold value. For example, when the delay spread value DS corresponding to the received signal is less than the first threshold value, the LLR adjustment circuit 311 may compare the delay spread value DS with a second threshold value which is less than the first threshold value, and when the delay spread value DS is greater than or equal to the second threshold value, the LLR adjustment circuit 311 may output a second adjustment coefficient, corresponding to the second threshold value, to the LLR calculation circuit 312. Here, the second adjustment coefficient may be less than the first adjustment coefficient. That is, as the delay spread value DS increases, the adjustment coefficient AC output by the LLR adjustment circuit 311 may be reduced.

The receiver according to an embodiment may perform channel estimation by PRG units, and the LLR calculation circuit 312 according to an embodiment may calculate an LLR corresponding to a subcarrier disposed at both edges (e.g. each subcarrier disposed at an edge) of a PRG, based on the adjustment coefficient AC. The amount of channel change may be large at both edges of the PRG, and when the amount of channel change is large, a channel estimation error may be large. The LLR adjustment circuit 311 may output the adjustment coefficient AC to the LLR calculation circuit 312 to calculate the LLR of subcarriers located at both edges of the PRG, which are inferred to have low reliability, thereby enhancing the performance of decoding. For example, referring to Equation 5 described above, the LLR adjustment circuit 311 may adjust a $\varepsilon_i$ value which is used in calculating an LLR, based on a characteristic (adjustment information AI) of a channel. That is, the adjusted $\varepsilon_i$ may be the adjustment coefficient AC. For example, $\varepsilon_i$ which is relatively small may be applied to a subcarrier corresponding to an edge of a PRG, and thus, an LLR where reliability is low may be adjusted. The receiver according to an embodiment may infer a channel estimation error based on the adjustment information AI, and thus, may adjust an LLR where reliability is low, thereby enhancing the performance of decoding.

The LLR adjustment circuit 311 according to an embodiment may output the adjustment coefficient AC which decreases as the number of REs, to which a reference signal included in the adjustment information AI is allocated, is reduced. For example, when the number of REs, to which a reference signal is allocated, is less than a third threshold value and greater than a fourth threshold value, the LLR adjustment circuit 311 may output a third adjustment coefficient. When the number of REs, to which the reference signal is allocated, is less than the fourth threshold value, the LLR adjustment circuit 311 may output a fourth adjustment coefficient which is less than the third adjustment coefficient. The embodiment described above may be only an embodiment, and the inventive concept is not limited thereto. For example, the LLR adjustment circuit 311 may output an adjustment coefficient AC proportional to the number of REs to which the reference signal is allocated.

The LLR adjustment circuit 311 according to an embodiment may output the adjustment coefficient AC with reference to the delay spread value DS included in the adjustment information AI and the number of REs to which the reference signal is allocated. For example, when the delay spread value DS is constant, the LLR adjustment circuit 311 may output the adjustment coefficient AC which decreases as the number of REs, to which the reference signal is allocated, is reduced.

As described above, the LLR adjustment circuit 311 according to an embodiment may determine an adjustment coefficient based on pieces of information (for example, the delay spread value DS and/or the number of REs to which the reference signal is allocated) included in the adjustment information AI. That is, the receiver according to an embodiment may infer the reliability of an LLR based on the adjustment information AI, and in a case which calculates an LLR which is predicted to have low reliability, the receiver may calculate an adjustment LLR (ALLR) based on an adjustment coefficient AC determined based on the adjustment information AI, thereby enhancing the performance of decoding.

As described above, a channel estimation error may increase as the number of REs, to which a reference signal is allocated, is reduced, and as the delay spread value DS increases. Also, the reliability of an LLR corresponding to each of a plurality of REs to which a data signal is allocated may be low. Particularly, the reliability of an LLR corresponding to a subcarrier disposed at an edge of a PRG may be low. The wireless communication device 200a according to an embodiment may not separately calculate a channel estimation error and may adjust an LLR having low reliability, based on a delay spread value DS calculated for channel estimation, and thus, may enhance the performance of decoding. In other words, the wireless communication device 200a may adjust an LLR having low reliability by using a delay spread value DS calculated for channel estimation and may not separately calculate a channel estimation error for adjusting the LLR having low reliability, and thus, may not consume time and power for calculating a channel estimation error.

Although a plurality of blocks illustrated in FIG. 3 are illustrated as separate elements, operations of the plurality of blocks illustrated in FIG. 3 may be implemented with one circuit, and the wireless communication device 200a may further include elements in addition to the elements illustrated in FIG. 3. For example, the wireless communication device 200a may further include a decoder which is configured to perform decoding based on an ALLR.

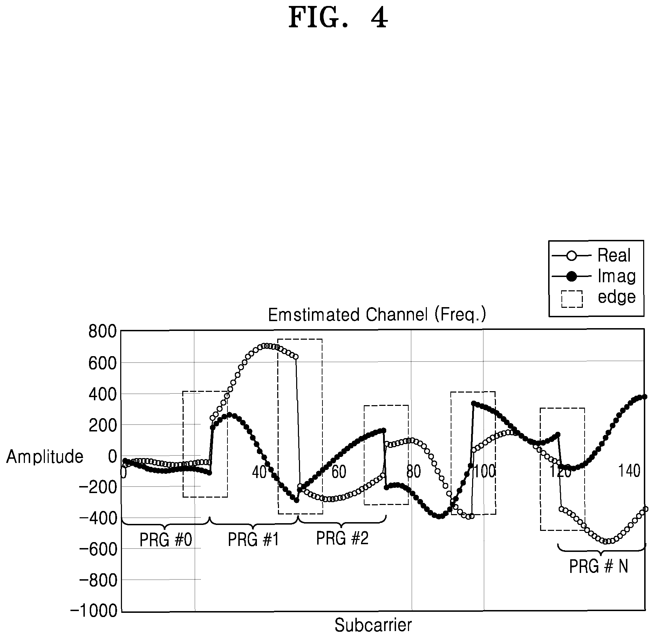

FIG. 4 is a graph for describing a frequency selectivity in an edge portion of a PRG, according to an embodiment.

As described above, in an NR network, channel estimation using a reference signal may be performed by PRG units. Referring to FIG. 4, a receiver according to an embodiment may receive a reference signal and a data signal through N number of PRGs PRG#1 to PRG#N. A PRG may be a group of resource elements over which the same precoding matrix is applied. A PRG may be a contiguous group of resource elements. In FIG. 4, when different precoding is applied by PRG units, a channel estimation result of a PRG unit in the receiver may be represented by a real number and an imaginary number.

Referring to FIG. 4, different precoding may be reflected by PRG units, and thus, channel continuity between PRGs may not be guaranteed. Therefore, a reduction in performance of a wireless communication system may occur when performing channel estimation on a plurality of PRGs. In channel estimation technology on PRG units, various schemes such as an MMSE scheme described above or a finite impulse response (FIR) scheme may be applied. Channel estimation performed by PRG units, as described above, may cause an increase in a channel estimation error in subcarriers disposed at both edges of a PRG. Accordingly, the reliability of an LLR corresponding to a subcarrier disposed at an edge of a PRG may be low. As the reliability of an LLR is reduced, the performance of decoding may decrease, and due to this, it may be difficult to recover a received signal. As described above, the receiver according to an embodiment may adjust an LLR, inferred to have low reliability, to be reduced for enhancing the performance of decoding.

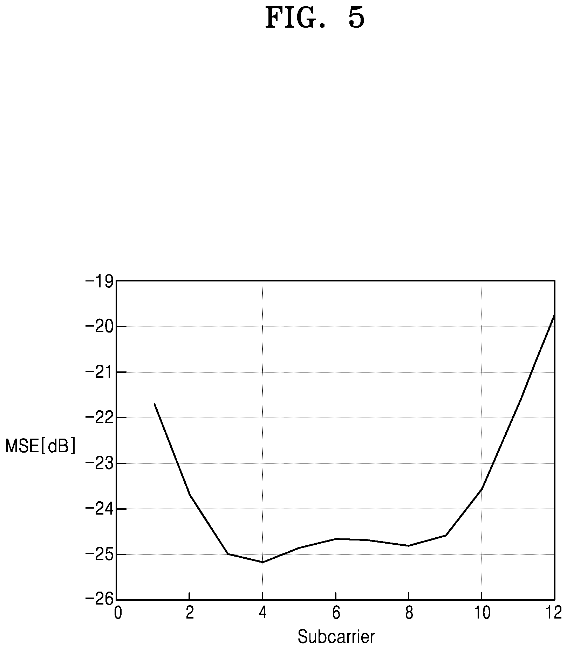

FIG. 5 is a graph for describing a mean square error (MSE) in an edge portion of a PRG, according to an embodiment.

FIG. 5 may be described with reference to FIG. 4, and repeated descriptions thereof are omitted.

Referring to FIG. 5, a channel estimation error of each of a plurality of subcarriers included in a PRG described above with reference to FIG. 4 is illustrated. In detail, FIG. 4 illustrates an MSE of each of the plurality of subcarriers included in the PRG. It may be seen that a high MSE occurs in subcarriers of both edges (or an edge region), with respect to the center of the PRG. That is, as described above, a channel estimation error of subcarriers disposed at both edges of the PRG may be large. In other words, the channel estimation error increases at each subcarrier at an edge of the PRG (e.g. at subcarriers at the edges of the PRG). For the convenience of description, FIG. 5 shows an embodiment in which the PRG has a single RB. The present disclosure is not limited thereto. For example, the PRG may include two or more RBs sharing the same precoding matrix. For two PRGs adjacent to each other having different precoding matrices, subcarriers adjacent to the boundary between the two adjacent PRGs may be inferred to have a large channel estimation error compared to subcarriers at the center of each of the two PRGs. In FIG. 4, such large channel estimation error at the boundary between two adjacent PRGs is described.

The abscissa axis of a graph shown in FIG. 5 represents twelve subcarrier indexes included in one PRG, and the ordinate axis represents an MSE of each subcarrier.

Referring to FIG. 5, it may be seen that an MSE of each of a first subcarrier and a twelfth subcarrier respectively disposed at both edges of the PRG is greater than an MSE corresponding to a sixth subcarrier disposed at the center among twelve subcarriers included in the PRG.

As a delay spread (for example, RMS delay spread) value increases in a time domain, the amount of change of a channel (or a frequency selectivity of the channel) may increase, and a channel estimation error at both edges of the PRG may increase. As a channel estimation error increases, the reliability of an LLR corresponding to each subcarrier disposed at an edge of the PRG may be reduced. Here, a frequency selectivity may denote the degree to which delay spread selectively occurs for each subcarrier. Also, as described above, a frequency selectivity may increase as the number of REs, to which a reference signal is allocated, is reduced. That is, as the number of REs to which the reference signal is allocated is reduced, a channel estimation error at both edges of the PRG may increase, and the reliability of an LLR corresponding to a subcarrier disposed at both edges of the PRG may be reduced.

Therefore, in order to enhance the performance of decoding, the receiver according to an embodiment may determine an adjustment coefficient (AC of FIG. 3) for adjusting an LLR of a subcarrier disposed at each edge of the PRG, based on adjustment information (AI of FIG. 3) including a delay spread value (DS of FIG. 3), and may calculate an ALLR which is less in magnitude than a conventional LLR, based on the adjustment coefficient AC.

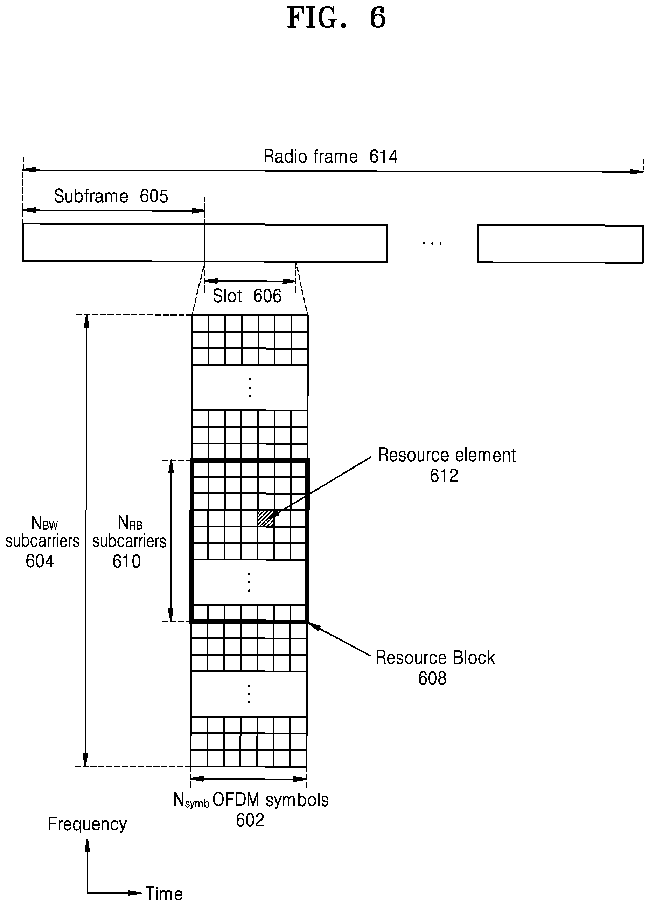

FIG. 6 is a diagram illustrating a basic structure of a time-frequency domain which is a wireless resource region, in a wireless communication system.

Referring to FIG. 6, the abscissa axis represents a time domain, and the ordinate axis represents a frequency domain. A minimum transmission unit in a time domain may be an orthogonal frequency division multiplexing (OFDM) symbol, and $N_{symb}$ number (602) of OFDM symbols may configure one slot 606. Two slots may configure one subframe 605. As an example, a length of the slot 606 may be about 0.5 ms, and a length of the subframe 605 may be about 1.0 ms. However, this may be an embodiment, and a length of the slot 606 may vary based on a configuration of the slot 606, and the number of slots 606 included in the subframe 605 may vary based on a length of the slot 606. Furthermore, in an NR network, a time-frequency domain may be defined with respect to the slot 606. Also, a radio frame 614 may be a unit of a time domain configured with ten subframes 605.

A minimum transmission unit in a frequency domain may be a subcarrier, and a bandwidth of a total system transmission band may be configured with total $N_{BW}$ number (604) of subcarriers. A basic unit of a resource in a time-frequency domain may be an RE 612 and may be represented by an OFDM symbol index and a subcarrier index. A resource block (RB) 208 may be defined as number (610) of continuous subcarriers in $N_{symb}$ number (602) of continuous OFDM symbols in a time domain and $N_{RB}$ number (610) of continuous subcarriers in a frequency domain. Accordingly, one RB 208 may be configured with ($N_{symb} * N_{RB}$) number of REs 612.

A data signal may be allocated to a plurality of first REs, and a reference signal may be allocated to a plurality of second REs. For example, one RB may include a plurality of first REs and a plurality of second REs, and one PRG may include a plurality of RBs. The plurality of first REs may be disposed between the plurality of second REs.

In an embodiment, a basic structure of a time-frequency domain illustrated in FIG. 6 may be used in wireless communication between user equipment and a cell. For convenience of description, an embodiment may be described with reference to an example where a basic structure of a time-frequency domain described with reference to FIG. 6 is used in wireless communication. However, embodiments are not limited thereto.

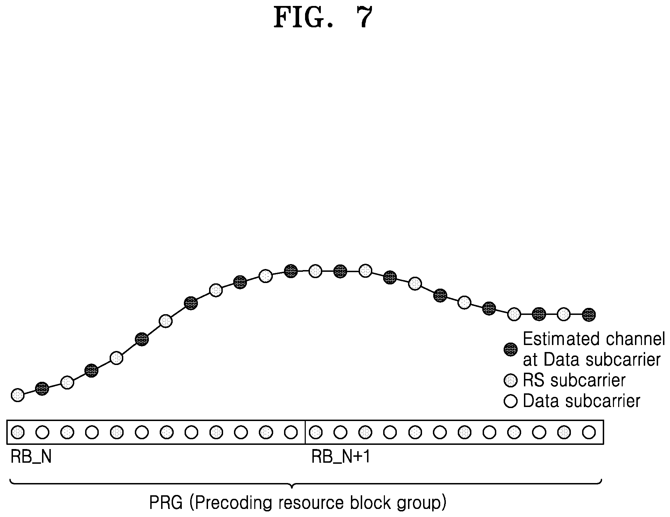

FIG. 7 is a diagram for describing channel estimation of a data signal based on a reference signal, according to an embodiment.

FIG. 7 illustrates channel estimation on a plurality of data subcarriers to which a data signal is allocated, based on a plurality of RS subcarriers to which a reference signal included in each of an Nth RB RB_N and an Nth+1 RB RB_N+1 each included in the same PRG is allocated. In an embodiment, a PRG may include at least one RB sharing the same precoding matrix. For example, the Nth RB RB_N and the Nth+1 RB RB_N+1 share the same precoding matrix.

Referring to FIG. 7, the receiver may estimate a channel of a data subcarrier to which a data signal is allocated, based on an RS subcarrier to which a reference signal is allocated. A reference signal such as a DMRS may be commonly known to both the transmitter and the receiver, and thus, the receiver may calculate a channel of an RS subcarrier to which a reference signal is allocated. As illustrated in FIG. 7, one data subcarrier among data subcarriers to which a data signal is allocated may be disposed between two adjacent RS subcarriers among the RS subcarriers to which a reference signal is allocated, and the receiver may estimate a channel of the data subcarrier to which a data signal is allocated, based on a relative position of the data subcarrier and the calculated channel of the reference signal.

In FIG. 7, for convenience of description, it is illustrated that one data subcarrier among the data subcarriers to which a data signal is allocated is disposed between two RS subcarriers adjacent to each other among the RS subcarriers to which a reference signal is allocated, but embodiments are not limited thereto and two or more data subcarriers to which a data signal is allocated may be disposed between RS subcarriers to which a reference signal is allocated. Therefore, referring to FIG. 7 and the above descriptions, as the number of RS subcarriers to which a reference signal is allocated is reduced, channel estimation on a data subcarrier to which a data signal is allocated may become less accurate, and a channel estimation error may increase. The data subcarriers and the RS subcarriers are included in the same PRG. In an embodiment, the PRG may include at least one RB sharing the same precoding matrix. For example, each RB may be consisted of twelve subcarriers each of which carries multiple data symbols of one time slot (e.g., 14 symbols). Each RB may be consisted of 168 REs. Some of the twelve subcarriers may be assigned to the data subcarriers, and the other to the RS subcarriers. For example, in the Nth+1 RB RB_N+1, the odd-numbered subcarriers (e.g., SC1, SC3, ..., and SC11) are assigned to the RS subcarriers, and the even-numbered subcarriers (e.g., SC2, SC4, ..., and SC12) are assigned to the data subcarriers.

The receiver according to an embodiment may adjust an LLR of a subcarrier disposed at each edge of the PRG, based on the number of subcarriers (or REs) to which a reference signal is allocated. That is, as the number of subcarriers (or REs) to which a reference signal is allocated is reduced, a channel estimation error of a subcarrier (for example, a subcarrier (i.e., a data subcarrier) to which a data signal is allocated) disposed at each edge of the PRG may increase, and thus, user equipment according to an embodiment may adjust an LLR of each subcarrier (e.g. each data subcarrier) disposed at an edge of the PRG to calculate an ALLR. For example, a pair of data subcarriers at both edges of the PRG correspond to the second subcarrier SC2 and the twelfth subcarrier SC12, respectively. The ALLR of each of the second subcarrier SC2 and the twelfth subcarrier SC12 in the Nth+1 RB RB_N+1 may be calculated. In an embodiment, the ALLR of only the twelfth subcarrier SC12 may be calculated in the Nth+1 RB RB_N+1.

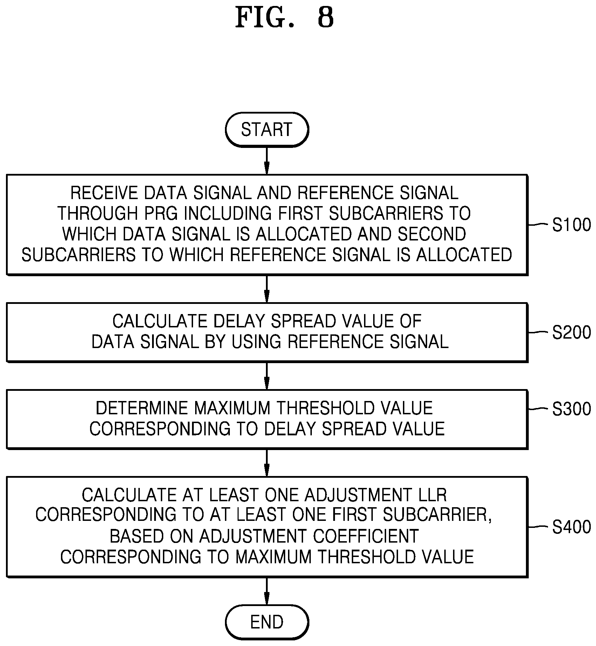

FIG. 8 is a flowchart illustrating an operating method of a modem chip, according to an embodiment.

As described above with reference to FIG. 2, an operation of the receiver (or a wireless communication device) according to an embodiment may be performed through the elements illustrated in FIG. 2, and the elements illustrated in FIG. 2 may be implemented as one modem chip. Accordingly, an LLR adjustment operation according to an embodiment described above may be performed through the modem chip according to an embodiment.

Referring to FIG. 8, in operation S100, the modem chip may receive a data signal and a reference signal through a PRG including a plurality of first subcarriers to which the data signal is allocated and a plurality of second subcarriers to which the reference signal is allocated.

In operation S200, the modem chip may calculate a delay spread value of the data signal by using the reference signal.

In operation S300, the modem chip may determine a maximum threshold value corresponding to the delay spread value. A maximum threshold value may be understood as described above.

In operation S400, the modem chip may calculate at least one ALLR corresponding to at least one first subcarrier, based on an adjustment coefficient corresponding to the maximum threshold value. As described above, the ALLR may denote an LLR adjusted based on the adjustment coefficient, and the conventional LLR may denote an LLR which is calculated by a conventional method without being based on a delay spread value and/or the number of REs to which a reference signal is allocated. The ALLR according to an embodiment may be less than a conventional LLR corresponding to a corresponding subcarrier. That is, each of at least one ALLR may be less than a conventional LLR corresponding to each of at least one first subcarrier respectively corresponding to at least one ALLR. As described above, at least one first subcarrier may be disposed at an edge of the PRG. As described above, at least one ALLR may be reduced as the number of second subcarriers decreases. Also, at least one ALLR may decrease as a delay spread value increases. That is, an ALLR may be inversely proportional to a delay spread value. Here, the delay spread value may be an RMS delay spread value described above, but embodiments are not limited thereto and the delay spread value may be, for example, a MAX delay spread value.

The modem chip according to an embodiment may calculate at least one channel estimation value respectively corresponding to at least one first subcarrier. The modem chip according to an embodiment may calculate at least one ALLR, based on at least one channel estimation value and an adjustment coefficient, and may skip the calculation of a channel estimation error corresponding to the at least one channel estimation value in calculating the at least one ALLR. For example, the modem chip may calculate the at least one ALLR based on the at least one channel estimation value and the adjustment coefficient without calculating a channel estimation error for the at least one channel estimation value.

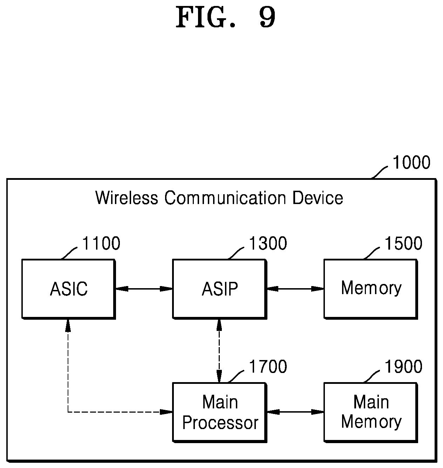

FIG. 9 is a block diagram illustrating a wireless communication device 1000 according to an embodiment.

The wireless communication device 1000 of FIG. 9 may correspond to the wireless communication device 200a of FIG. 2, and repeated descriptions thereof are omitted.

Referring to FIG. 9, the wireless communication device 1000 may include an application specific integrated circuit (ASIC) 1100, an application specific instruction set processor (ASIP) 1300, a memory 1500, a main processor 1700, and a main memory 1900. At least two of the ASIC 1100, the ASIP 1300, and the main processor 1700 may communicate with each other. Also, at least two of the ASIC 1100, the ASIP 1300, the memory 1500, the main processor 1700, and the main memory 1900 may be embedded in one chip. For example, as described above, at least two of the ASIC 1100, the ASIP 1300, the memory 1500, the main processor 1700, and the main memory 1900 may be included in one modem chip.

The ASIP 1300 may be an integrated circuit which is customized for certain use, may support a dedicated instruction set for a certain application, and may execute instructions included in the instruction set. The memory 1500 may communicate with the ASIP 1300 and may be a non-transitory storage device, and may store a plurality of instructions executed by the ASIP 1300. For example, in an embodiment, the memory 1500 may include an arbitrary-type memory accessible by the ASIP 1300 such as random access memory (RAM), read only memory (ROM), tape, a magnetic disc, an optical disc, a volatile memory, a non-volatile memory, and a combination thereof.

The main processor 1700 may execute the plurality of instructions to control the wireless communication device 1000. For example, the main processor 1700 may control the ASIC 1100 and the ASIP 1300 and may process received data or may process a user's input to the wireless communication device 1000. The main memory 1900 may communicate with the main processor 1700 and may be a non-transitory storage device, and may store the plurality of instructions executed by the main processor 1700. For example, in a non-limiting embodiment, the main memory 1900 may include an arbitrary-type memory accessible by the main processor 1700 such as RAM, ROM, tape, a magnetic disc, an optical disc, a volatile memory, a non-volatile memory, and a combination thereof.

An operating method of the wireless communication device according to an embodiment described above with reference to FIGS. 1 to 8 may be performed by at least one of the elements included in the wireless communication device 1000 of FIG. 9. In some embodiments, at least one operation of the operating method of the wireless communication device described above may be implemented with the plurality of instructions stored in the memory 1500. In some embodiments, the ASIP 1300 may execute the plurality of instructions stored in the memory 1500 and may thus perform at least one of operations of the operating method.

Hereinabove, embodiments have been described in the drawings and the specification. Embodiments have been described by using the terms described herein, but this has been merely used for describing the inventive concept and has not been used for limiting a meaning or limiting the scope of the inventive concept defined in the following claims. Therefore, it may be understood by those of ordinary skill in the art that various modifications and other equivalent embodiments may be implemented from the inventive concept. Accordingly, the scope of the inventive concept may be defined based on the scope of the following claims.

While the inventive concept has been particularly shown and described with reference to embodiments thereof, it will be understood that various changes in form and details may be made therein without departing from the scope of the following claims.

**Claims**

1. A modem chip comprising:

   a radio frequency integrated circuit, RFIC, configured to receive (S100) a data signal and a reference signal through a precoding resource block group, PRG, including a plurality of first subcarriers to which the data signal is allocated and a plurality of second subcarriers to which the reference signal is allocated; and
   a processor configured to:

   calculate (S200) a delay spread value of the data signal by using the reference signal,
   determine (S300) one of two threshold values, adjacent to the delay spread value, of a plurality of threshold values as a maximum threshold value corresponding to the delay spread value, and
   calculate (S400) an adjustment log likelihood ratio, LLR, of each of at least one first subcarrier among the plurality of first subcarriers, based on an adjustment coefficient corresponding to the maximum threshold value.

2. The modem chip of claim 1,
   wherein the adjustment LLR is less than a raw LLR, corresponding to the adjustment LLR, of each of the at least one first subcarrier.

3. The modem chip of claim 1 or claim 2,
   wherein the adjustment LLR is reduced as a number of the plurality of second subcarriers decreases.

4. The modem chip of any preceding claim,
   wherein the adjustment LLR is reduced as the delay spread value increases.

5. The modem chip of any preceding claim, further comprising:

   a memory configured to store the plurality of threshold values,
   wherein the at least one first subcarrier corresponds to a subcarrier having a lowest frequency among the plurality of first subcarriers in the PRG or a subcarrier having a highest frequency among the plurality of first subcarriers.

6. The modem chip of any preceding claim,
   wherein the processor is configured further to:

   calculate a channel estimation value of each of the at least one first subcarrier; and
   calculate the adjustment LLR based on the channel estimation value of each of the at least one first subcarrier without calculating a channel estimation error of the channel estimation value.

7. The modem chip of any preceding claim,
   wherein the delay spread value is a root mean square delay spread value.

8. An operating method of a modem chip, the operating method comprising:

   receiving (S100) a data signal and a reference signal through a precoding resource block group, PRG, including a plurality of first subcarriers to which the data signal is allocated and a plurality of second subcarriers to which the reference signal is allocated;
   calculating (S200) a delay spread value of the data signal by using the reference signal;
   determining (S300) one of two threshold values, adjacent to the delay spread value, of a plurality of threshold values as a maximum threshold value corresponding to the delay spread value; and
   calculating (S400) an adjustment log likelihood ratio, LLR, of each of at least one first subcarrier among the plurality of first subcarriers, based on an adjustment coefficient corresponding to the maximum threshold value.

9. The operating method of claim 8,

wherein the adjustment LLR is less than a raw LLR, corresponding to the adjustment LLR, of each of the at least one first subcarrier.

10. The operating method of claim 8 or claim 9,
   wherein the adjustment LLR is reduced as a number of the plurality of second subcarriers decreases.

11. The operating method of any of claims 8-10,
   wherein the adjustment LLR is reduced as the delay spread value increases.

12. The operating method of any of claims 8-11,
   wherein the at least one first subcarrier corresponds to a subcarrier having a lowest frequency among the plurality of first subcarriers in the PRG or a subcarrier having a highest frequency among the plurality of first subcarriers.

13. The operating method of any of claims 8-12, further comprising:
   calculating a channel estimation value of each of the at least one first subcarrier,
   wherein the calculating of the adjustment LLR comprises:
   calculating the adjustment LLR, based on the channel estimation value and the adjustment coefficient without calculating a channel estimation error of the channel estimation value.

14. A modem chip comprising:

   a radio frequency integrated circuit, RFIC, configured to receive (S100) a data signal and a reference signal through a precoding resource block group, PRG, including a plurality of first subcarriers to which the data signal is allocated and a plurality of second subcarriers to which the reference signal is allocated; and
   a processor configured to:

   calculate a delay spread value (S200) of the data signal by using the reference signal, and
   determine an adjustment coefficient so that an adjusted log likelihood ratio, LLR, of each of at least one first subcarrier among the plurality of first subcarriers is inversely proportional to the delay spread value,
   wherein the adjusted LLR corresponds to an LLR of each of the at least one first subcarrier adjusted using the adjustment coefficient.

15. The modem chip of claim 14,
   wherein the adjusted LLR of the at least one first subcarrier is reduced as a number of the plurality of second subcarriers decreases.

# FIG. 1

# FIG. 2

# FIG. 3

<u>200a</u>

# FIG. 4

# FIG. 5

# FIG. 6

Radio frame 614

Subframe 605

Slot 606

$N_{BW}$ subcarriers 604

$N_{RB}$ subcarriers 610

Resource element 612

Resource Block 608

$N_{symb}$ OFDM symbols 602

Frequency

Time

# FIG. 7

Estimated channel at Data subcarrier
RS subcarrier
Data subcarrier

RB_N          RB_N+1

PRG (Precoding resource block group)

# FIG. 8

START

RECEIVE DATA SIGNAL AND REFERENCE SIGNAL
THROUGH PRG INCLUDING FIRST SUBCARRIERS TO
WHICH DATA SIGNAL IS ALLOCATED AND SECOND
SUBCARRIERS TO WHICH REFERENCE SIGNAL IS ALLOCATED ── S100

CALCULATE DELAY SPREAD VALUE OF
DATA SIGNAL BY USING REFERENCE SIGNAL ── S200

DETERMINE MAXIMUM THRESHOLD VALUE
CORRESPONDING TO DELAY SPREAD VALUE ── S300

CALCULATE AT LEAST ONE ADJUSTMENT LLR
CORRESPONDING TO AT LEAST ONE FIRST SUBCARRIER,
BASED ON ADJUSTMENT COEFFICIENT
CORRESPONDING TO MAXIMUM THRESHOLD VALUE ── S400

END

# FIG. 9

Europäisches
Patentamt
European
Patent Office
Office européen
des brevets

# EUROPEAN SEARCH REPORT

Application Number

EP 25 19 9660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/308148 A1 (HAJIR MOUNA [US] ET AL) 28 September 2023 (2023-09-28) * paragraphs [0003] - [0009] * * paragraph [0042] * | 1-15 | INV. H04L25/02 H04L25/06 |
| A | EP 4 362 345 A1 (SAMSUNG ELECTRONICS CO LTD [KR]) 1 May 2024 (2024-05-01) * figure 5B * * paragraph [0017] * | 1-15 | ADD. H04B7/0413 |
| A | US 2019/222225 A1 (AHIRWAR VIJAY [IN] ET AL) 18 July 2019 (2019-07-18) * figures 1,3 * | 1-15 | |
| A | ICHIKAWA YUU ET AL: "Experimental Study of Simplified UTW-OFDM Receiver Technology for Application to 5G Using Software-Defined Radio Platform", IEEE OPEN JOURNAL OF VEHICULAR TECHNOLOGY, IEEE, vol. 4, 31 July 2023 (2023-07-31), pages 505-516, XP011946794, DOI: 10.1109/OJVT.2023.3300448 [retrieved on 2023-08-01] * the whole document * | 1-15 | |

TECHNICAL FIELDS
SEARCHED (IPC)

H04L
H04B

The present search report has been drawn up for all claims

| Place of search | Date of completion of the search | Examiner |
|---|---|---|
| Munich | 10 December 2025 | Schiffer, Andrea |

EPO FORM 1503 03.82 (P04C01)

## ANNEX TO THE EUROPEAN SEARCH REPORT
## ON EUROPEAN PATENT APPLICATION NO.

EP 25 19 9660

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2025

| Patent document cited in search report | | Publication date | Patent family member(s) | | Publication date |
|---|---|---|---|---|---|
| US 2023308148 | A1 | 28-09-2023 | DE 102023101124 | A1 | 28-09-2023 |
| | | | KR 20230140516 | A | 06-10-2023 |
| | | | TW 202339465 | A | 01-10-2023 |
| | | | US 2023308148 | A1 | 28-09-2023 |
| EP 4362345 | A1 | 01-05-2024 | EP 4362345 | A1 | 01-05-2024 |
| | | | TW 202429844 | A | 16-07-2024 |
| | | | US 2024137081 | A1 | 25-04-2024 |
| | | | US 2025240064 | A1 | 24-07-2025 |
| US 2019222225 | A1 | 18-07-2019 | NONE | | |

EPO FORM P0459

For more details about this annex : see Official Journal of the European Patent Office, No. 12/82